# NEUE EUROPÄISCHE PATENTSCHRIFT

(11) **EP 3 009 232 B2**
(45) Veröffentlichungstag und Bekanntmachung des Hinweises auf die Entscheidung über den Einspruch: **25.11.2020**
(45) Hinweis auf die Patenterteilung: 13.09.2017
(21) Anmeldenummer: 14189020.2
(22) Anmeldetag: 15.10.2014
(51) Int. Cl.: B24B 57/04, B24B 29/00, C09G 1/02, B05C 17/005

(54) **Verfahren und Vorrichtung zum Ausbringen von Festpasten zur Oberflächenbearbeitung, Verfahren und System zur Oberflächenbearbeitung sowie entsprechende Verwendung**
Method and device for the application of solid pastes for surface treatment, method and system for surface treatment and corresponding use
Procédé et dispositif de pulvérisation de pâtes dures pour le traitement de surfaces, procédé et système de traitement de surfaces, ainsi qu'utilisation correspondante

(43) Veröffentlichungstag der Anmeldung: 20.04.2016
(73) Patentinhaber: Menzerna Polishing Compounds GmbH & Co. KG, 76470 Ötigheim (DE)
(72) Erfinder: Messmer, Rudi, 76597 Loffenau (DE)
(74) Vertreter: Witte, Weller & Partner Patentanwälte mbB

(56) Entgegenhaltungen:
- DE-A1- 4 412 417
- DE-A1- 19 812 767
- DE-U1- 29 823 896
- DE-U1- 29 911 300
- JP-A- S55 144 963
- JP-A- S55 144 963
- JP-U- S63 149 278
- US-A- 2 541 283
- US-A- 2 764 856

## Beschreibung

Die vorliegende Offenbarung betrifft ein Verfahren zum Ausbringen von Festpasten zur Oberflächenbearbeitung auf ein Bearbeitungswerkzeug. Die Offenbarung betrifft ferner ein Verfahren zur Bearbeitung von Werkstücken mit Festpasten zur Oberflächenbearbeitung, eine Vorrichtung zum Ausbringen von Festpasten zur Oberflächenbearbeitung auf ein Bearbeitungswerkzeug sowie ein System zur automatisierten Bearbeitung von Werkstücken. Ferner betrifft die Offenbarung die Verwendung einer Festpaste zur Oberflächenbearbeitung.

Aus der JP S55 144963 A ist ein Verfahren zum Ausbringen eines festen Poliermittels auf eine Polierscheibe bekannt, wobei das Poliermittel in eine Pelletform gebracht, geschmolzen und zerstäubt wird, mittels eines Luftstroms transportiert wird, und in diesem geschmolzenen Zustand, vor dem Abkühlen und Verfestigen, auf die Polierscheibe gesprüht wird. Aus der DE 298 23 896 U1 sowie aus der DE 198 12 767 A1 ist ein Pastenspender, insbesondere zum Aufschmelzen und Auftragen eines rieselfähigen, schmelzbaren Mediums, bekannt, der mit hoher Frequenz gewechselt werden müssen. Schließlich sollen sich nach Möglichkeit Verluste beim Auftragen oder Übertragen der Festpaste auf die Polierscheibe oder das Polierband minimieren lassen. Ferner werden vorzugsweise insgesamt bei der Polierbearbeitung Kosteneinsparungen erzielt, vorzugsweise durch Erhöhung der zur Bearbeitung zur Verfügung stehenden Zeit sowie durch Verringerung von Polierpastenverlusten. Ferner sollen im Rahmen der Erfindung möglichst ein Verfahren zur Oberflächenbearbeitung_von Werkstoffen sowie ein zur Durchführung des Verfahrens geeignetes System angegeben werden. Schließlich soll eine vorteilhafte Verwendung von Poliermittel in Form von Festpasten in einem Verfahren zum Ausbringen von Festpasten bzw. zur Oberflächenbearbeitung_mittels Festpasten angegeben werden.

Die vorliegende Offenbarung betrifft allgemein das Gebiet der Oberflächenbearbeitung, insbesondere das Gebiet der mechanischen Oberflächenbearbeitung. Unter dem Begriff Oberflächenbearbeitung können insbesondere Polierprozesse, Bürstprozesse, Schleifprozesse und ähnliche Material abtragende bzw. Oberflächen einebnende Prozesse verstanden werden. Sofern im Rahmen der nachfolgenden Ausführungen von Poliermaschinen, Polierscheiben, Polierpasten und Ähnlichem die Rede ist, sollen hierunter grundsätzlich auch die entsprechenden Äquivalente aus der Schleifbearbeitung, der spanenden Bearbeitung und/oder der bürstenden Bearbeitung fallen. Der Übergang von einer Polierbearbeitung zu einer Schleifbearbeitung ist häufig fließend. Polieranwendungen sind häufig dem Gebiet der mechanischen Feinbearbeitung, insbesondere dem Gebiet der mechanischen Feinstbearbeitung von Oberflächen zugeordnet.

Polieren, Bürsten und Schleifen können grundsätzlich als Untergruppen glättender Bearbeitungsverfahren aufgefasst werden. Bürstanwendungen, Polieranwendungen und Schleifanwendungen können sich teilweise überschneiden. Polieren beruht regelmäßig auf verschiedenen Wirkprinzipien. Einerseits erfolgt beim Polieren ein gewisser Materialabtrag. Ferner werden beim Polieren regelmäßig Rauigkeitsspitzen einer Oberflächenstruktur des Werkstücks verformt und insbesondere eingeebnet. Ferner können beim Polieren Hohlräume bzw. Unebenheiten zumindest teilweise aufgefüllt werden. Allgemein dienen Polierverfahren, Bürstverfahren und Schleifverfahren dazu, die Oberflächenrauheit von Bauteilen zu verringern und vorzugsweise auf der Oberfläche des Bauteils einen Glanz zu erzeugen. Es sind auch Anwendungen denkbar, bei denen die Gratentfernung oder dgl. im Vordergrund steht.

Übliche Vorrichtungen zum Polieren umfassen üblicherweise zumindest eine Polierscheibe bzw. ein Polierband. Die Polierscheibe kann einen Trägerwerkstoff bereitstellen, der etwa aus natürlichen Werkstoff (Naturfasern, Baumwolle, Sisal, Papier, etc.) oder künstlichen Werkstoffen (Kunstfasern) hergestellt ist. Auch schwammartige Werkstoffe können für Polierscheiben verwendet werden. Üblicherweise erfolgt eine Polierbearbeitung dadurch, dass ein geeignetes Poliermittel auf die Polierscheibe aufgebracht wird. Aufgrund einer Relativbewegung zwischen der Polierscheibe und einem zu bearbeitenden Werkstück kann das entsprechende Poliermittel mit dem Werkstück in Kontakt treten, um auf dieses bearbeitend, insbesondere glättend, einzuwirken.

Polierscheiben, Bürsten oder Schleifscheiben können etwa Wirkbereiche aufweisen, die Stoffe im allgemeinen, Baumwolle, Sisal, Polymere, Papiere, Filz, Leder oder ähnliche Bestandteile umfassen. Die Scheibe kann allgemein als Poliermittelträger bezeichnet werden. Das Schleifkorn kann etwa auf Basis von Tonerde, Aluminiumoxid, Chromtrioxid oder ähnlichen harten Werkstoffen gebildet sein.

Die vorliegende Offenbarung bezieht sich ferner insbesondere auf die Bereiche industrielles Schleifen bzw. Polieren und vorzugsweise hochautomatisiertes Schleifen bzw. Polieren. Es sind Schleifeinrichtungen oder Poliereinrichtungen bekannt, die etwa Bearbeitungszellen umfassen, in denen einerseits die Poliervorrichtung selbst, andererseits jedoch auch Elemente zum automatischen Zuführen zu bearbeitender Werkstücke vorgesehen sind. Beispielhaft können Handhabungseinrichtungen, wie etwa Roboter, Rundtaktmaschinen oder Flachbettpoliermaschinen, vorgesehen sein, die dazu ausgebildet sind, zu bearbeitende Werkstücke zu greifen und in Kontakt mit der Polierscheibe zu bringen. Ferner können die Handhabungseinrichtungen dazu ausgestaltet sein, eine Relativbewegung zwischen dem Werkstück und der Polierscheibe zu bewirken, um die gewünschten Bereiche des Werkstücks zu bearbeiten. Mit anderen Worten kann etwa ein Handhabungsroboter vorgesehen sein, der ein "manuelles" Verschwenken bzw. Verschieben des Werkstücks relativ zur (sich drehenden) Polierscheibe imitiert.

Es ist grundsätzlich erforderlich, das sich verbrauchende Poliermittel auf der Polierscheibe zu ersetzen. Dies erfolgt oft intervallweise bzw. quasi-kontinuierlich. Beispielsweise kann das Poliermittel in die Polierscheibe "einmassiert" werden. Das Auftragen oder Einmassieren kann stoßweise und/oder periodisch erfolgen. Zumindest teilweise abrasiv wirksame Mittel, allgemeiner Mittel zur Oberflächenbearbeitung, also etwa Poliermittel, Bürstmittel oder Schleifmittel, werden üblicherweise in definierten Darreichungsformen bzw. Zuständen angeboten. Es kann sich hierbei etwa um Festpasten oder um Emulsionen handeln. Ferner können Poliermittel oder dgl. etwa als Salben, Cremes und/oder Polituren vorliegen.

Emulsionen zur Oberflächenbearbeitung bestehen üblicherweise aus einem Gemisch von Wasser, Fetten, Ölen sowie Schleifkorn (üblicherweise auf Basis keramischer Werkstoffe), das idealerweise in der Emulsion gleichverteilt vorliegt. Emulsionen zur Oberflächenbearbeitung sind üblicherweise bei Raumtemperatur (25°C) flüssig und gießfähig. Eine Konsistenz kann etwa mit der Konsistenz von Trinkjoghurt verglichen werden. Da die entsprechenden Emulsionen bereits bei Raumtemperatur fließfähig sind, können die Emulsionen in einfacher Weise über Rohrleitungssysteme, Schläuche oder Ähnliches gefördert werden. Die Emulsionen können durch Sprühdüsen ausgebracht und auf das Polierwerkzeug aufgesprüht werden.

Festpasten zur Oberflächenbearbeitung stellen eine zweite wesentliche Gruppe von Schleifmitteln oder Poliermitteln dar. Es handelt sich bei den Festpasten üblicherweise um Gemische aus Lipiden (umfassend etwa Fette, Öle und Wachse), diesen beigemengten Additiven sowie einem entsprechenden Anteil an Schleifkorn, das dem Trägerwerkstoff idealerweise gleichverteilt beigemischt ist. Je nach beabsichtigter Anwendung können die Schleifkörner etwa eine Größe von 0,1 µm (Mikrometer) bis hin zu etwa 200 µm aufweisen. Die Schleifkörner können etwa einen Massenanteil von 50 % bis 80 % der Paste ausmachen. Üblicherweise werden Festpasten bei leicht erhöhter Temperatur vermischt bzw. formuliert. Ein so entstehendes Gemisch wird üblicherweise in Formen gegossen, um nach dem Erstarren als barrenartige oder stangenartige Festpasten bereitzustehen. Für die industrielle Bearbeitung geeignete Stangen aus Festpasten können etwa 300 mm bis 500 mm lang sein. Insbesondere können derartige Festpasten als sog. Automatenriegel bezeichnet werden. Festpasten können Polierpasten, Bürstpasten, Schleifpasten und geeignete Mischformen umfassen.

Es sind Festpastenzuführgeräte bekannt, in die derartige Stangen eingespannt werden können. Solcherlei Zuführgeräte können etwa Antriebe aufweisen, die eine Vorschubbewegung mit Pilgerschrittcharakteristik ermöglichen. Beispielsweise kann die Stange in regelmäßigen (Zeit-)Abständen gegen die rotierende Schleif- oder Polierscheibe gedrückt werden. Durch die Relativbewegung zwischen der Scheibe und der Festpaste entsteht in nicht unerheblichem Maße Reibungswärme, wodurch die Festpaste an ihrer Kontaktfläche mit der Scheibe angeschmolzen bzw. aufgeschmolzen wird. Demgemäß wird ein bestimmter Teil des erweichten Materials auf das Polierwerkzeug übertragen. Aufgrund der hohen Umfangsgeschwindigkeit der Scheiben ist diese Art der Auftragung jedoch häufig mit Verlusten verbunden. Teile der geschmolzenen bzw. erweichten Festpaste werden schlichtweg von der Scheibe weggeschleudert. Üblicherweise kann davon ausgegangen werden, dass 50 bis 80 % der Festpaste von der Scheibe aufgenommen werden und zu Bearbeitungszwecken einsetzbar sind. Die verbliebende Menge (20 bis 50 %) kann nicht für den Bearbeitungsprozess genutzt werden und sind als Verlust in Kauf zu nehmen.

Sowohl die Bearbeitung mit Festpastenriegeln als auch die Bearbeitung mit Emulsionen sind mit verschiedenen Nachteilen verbunden. Das Polieren mit Festpasten und insbesondere Festpastenzuführgeräte für die automatisierte Bearbeitung beruhen auf grundsätzlich althergebrachten und erprobten Technologien. Festpastenzuführgeräte "imitieren" ein manuelles Auftragen des Poliermittels auf die Polierscheibe. Die Maximallänge der Stangen limitiert jedoch die mögliche Einsatzzeit einer solchen Poliervorrichtung, da entsprechend neue Stangen nachgelegt werden müssen, wenn eine alte Stange aufgebraucht ist. Dies steht in Widerspruch zum Konzept der automatisierten Bearbeitung.

Ferner kann eine Festpastenstange häufig nicht vollständig verarbeitet werden, da eine Mindestlänge nicht unterschritten werden darf. Dies kann einerseits durch Sicherheitsaspekte bedingt sein (vergleichbar etwa einer Mindestbelagdicke bei einem Bremsbelag). Ferner kann dies schlichtweg dadurch bedingt sein, dass die Stange im Festpastenzuführgerät geführt und gegriffen werden muss, um einen etwa pilgerschrittartigen Vorschub bewirken zu können. Die genannte Restmenge erhöht daher die Verluste noch weiter. Auch aus Umwelt- und Entsorgungsaspekten ist es nachteilig, dass - je nach tatsächlichen Anwendungsbedingungen - weniger als die Hälfte der grundsätzlich verfügbaren Pastenmenge tatsächlich für die Bearbeitung nutzbar ist. Beim Übertragen der Paste auf die Polierscheibe werden Teilmengen der Paste regelmäßig weggeschleudert. Demgemäß können starke Verschmutzungen auftreten. Festpastenzuführgeräte müssen stets in unmittelbarer Nähe der Polierscheibe bzw. des Polierrads angeordnet sein, um die Stange entsprechend in Eingriff mit dem Rad bringen zu können. Somit sind Festpastenzuführgeräte den auftretenden Verschmutzungen in starkem Maße ausgesetzt.

Ein weiterer Nachteil etablierter Verfahren zur Bearbeitung mit Festpastenriegeln kann darin gesehen werden, dass der Festpastenriegel bzw. die Festpastenstange idealerweise eine Breite aufweist, die an die Breite der Polierscheibe angepasst ist. Dies führt zu einer hohen Variantenvielfalt und erhöht die Stückkosten.

Die weiter oben beschriebenen Emulsionen zur Oberflächenbearbeitung können zwar grundsätzlich automatisiert verarbeitet werden, da sie bereits bei Raumtemperatur fließfähig sind. Jedoch hat sich gezeigt, dass das Schleifergebnis bzw. Polierergebnis bei Verwendung von Festpasten häufig höherwertig als bei der Verwendung von Emulsionen ist. Ferner ergeben sich bei Festpasten häufig kürzere Zykluszeiten. Emulsionen werden stets unter der Randbedingung der geforderten Fließfähigkeit bzw. Pumpfähigkeit bei Raumtemperatur formuliert. Demgemäß kann die Zusammensetzung einer Emulsion nur in relativ engen Grenzen variiert werden. Im Gegensatz dazu erlauben Festpasten deutlich weitergehende Variationen und Abwandlungen betreffend ihre Zusammensetzung.

Auch bei Polierverfahren, die in Form von Emulsionen vorliegende Poliermittel umfassen, kann ein beträchtlicher Teil der Emulsion verloren gehen, ohne für die Bearbeitung genutzt werden zu können. Dies kann insbesondere mit dem Wegschleudern von Teilmengen der Emulsion durch die sich mit hoher Umfangsgeschwindigkeit drehende Polierscheibe erklärt werden.

Ferner konnte verschiedentlich beobachtet werden, dass Schleif- und Polierabfälle auf Basis von Poliermitteln oder Schleifmitteln zuweilen zur Eigenerwärmung bzw. Selbstentzündung neigen. Dies kann u.U. sogar zur Entstehung von Bränden führen und demgemäß mit hoher Gefahr für die Fertigungseinrichtungen als auch für etwaiges Bedienpersonal verbunden sein.

Ferner sind Poliermittel auf Basis von Festpasten Emulsionen dahingehend überlegen, dass bei deren Lagerung wesentlich weniger Randbedingungen eingehalten werden müssen. Insbesondere konnte beobachtet werden, dass sich Emulsionen (Dispersion) bei niedrigen Temperaturen (etwa unter 0 °C) und bei Temperaturen etwa oberhalb von 40°C selbst entmischen können. Dies führt dazu, dass die Emulsionen unbrauchbar werden und schlichtweg entsorgt werden müssen, schlimmstenfalls als Sondermüll. Auch in zeitlicher Hinsicht müssen bei der Lagerung von Emulsionen relativ enge Grenzen beachtet werden. Festpasten sind im Hinblick auf Temperaturschwankungen und Extremtemperaturen deutlich unempfindlicher. Üblicherweise können Poliermittel auf Basis von Festpasten etwa bei -60°C bis +80 °C transportiert und/oder gelagert werden. Erhöhte Temperaturen können zwar Verformungen mit sich bringen, wenn Fraktionen der Festpaste angeschmolzen werden. Dies ist jedoch üblicherweise ein reversibler Prozess und wirkt sich nicht nachteilig auf die Gebrauchseignung der Festpasten aus.

Die oben genannte DE 298 23 896 U1 schlägt zwar vor, allgemein ein rieselfähiges und schmelzbares Poliermittel zu verwenden, um auf dessen Basis die Vorteile von Festpasten und Emulsionen (in der DE 298 23 896 U1 genannt: flüssige Pasten) zu kombinieren. Hierzu wird allgemein angeführt, einen Druckzylinder, einen Förderzylinder, eine heizbare Auspresskammer und eine Auspressdüse zu verbauen. Die DE 298 23 896 U1 geht jedoch in keiner Weise auf Details einer solchen Ausgestaltung ein. Dem Dokument kann allenfalls entnommen werden, dass scheinbar rieselfähige Pasten durch ein Fördersystem in Richtung der heizbaren Auspresskammer und der Auspressdüse gefördert wird. Darüber hinaus sind dem Dokument jedoch keine Hinweise entnehmbar, wie eine solche Anlage ausgestaltet und funktionstüchtig gemacht werden soll. Ferner lassen sich dem Dokument keine weiteren Hinweise auf die verwendeten Poliermittel entnehmen.

Vor diesem Hintergrund liegt der Erfindung die Aufgabe zugrunde, ein Verfahren sowie eine Vorrichtung zum Ausbringen von Festpasten zur Oberflächenbearbeitung anzugeben, die vorteilhaft bei automatisierten Bearbeitungsanlagen zur Schleifbearbeitung und/oder Polierbearbeitung verwendet werden können und deren Automatisationsgrad insbesondere weiter erhöhen können. Ferner sollen sich im Betrieb der Fertigungsanlage weiterhin die Vorteile verwirklichen lassen, die mit der Verwendung von Poliermitteln auf Basis von Festpasten einhergehen. Nach Möglichkeit soll jedoch eine kontinuierliche oder quasi-kontinuierliche Versorgung mit der Festpaste gewährleistet werden, ohne dass Polierriegel, Polierstangen oder ähnliche Teilmengen der Festpaste mit hoher Frequenz gewechselt werden müssen. Schließlich sollen sich nach Möglichkeit Verluste beim Auftragen oder Übertragen der Festpaste auf die Polierscheibe oder das Polierband minimieren lassen. Ferner werden vorzugsweise insgesamt bei der Polierbearbeitung Kosteneinsparungen erzielt, vorzugsweise durch Erhöhung der zur Bearbeitung zur Verfügung stehenden Zeit sowie durch Verringerung von Polierpastenverlusten. Ferner sollen im Rahmen der Erfindung möglichst ein Verfahren zur Oberflächenbearbeitung_von Werkstoffen sowie ein zur Durchführung des Verfahrens geeignetes System angegeben werden. Schließlich soll eine vorteilhafte Verwendung von Poliermittel in Form von Festpasten in einem Verfahren zum Ausbringen von Festpasten bzw. zur Oberflächenbearbeitung_mittels Festpasten angegeben werden.

Die Aufgabe der Erfindung wird durch ein Verfahren gemäß dem unabhängigen Verfahrensanspruch gelöst.

Die Aufgabe der Erfindung wird auf diese Weise vollkommen gelöst.

Erfindungsgemäß ist es nämlich vorgesehen, die Festpaste (etwa Polierpaste, Bürstpaste oder Schleifpaste) so weit zu erweichen, dass sich diese zumindest ansatzweise wie ein Fluid verhält, so dass ein Transport durch ein Leitungssystem oder Schlauchsystem ermöglicht ist. Wesentlich ist jedoch, dass die Festpaste nicht so weit aufgeschmolzen wird, dass wesentliche Anteile des vormals fest gebundenen Schleifrung, etwa eine Verchromung oder einen ähnlich gelagerten Bearbeitungs- und/oder Beschichtungsprozess durchgeführt werden. Dies kann insbesondere auch das Entfernen und/oder Einebnen von Graten, insbesondere von Stanzgraten oder sonstigen Bearbeitungsgraten, umfassen. Es versteht sich, dass auch nicht-metallische Oberflächen sowie beschichtete bzw. lackierte Oberflächen mit entsprechenden Bearbeitungswerkzeugen bearbeitet werden können, insbesondere poliert werden können.

Sofern im Rahmen dieser Ausarbeitung der Begriff Festpaste verwendet wird, soll darunter eine Paste verstanden werden, die bei Raumtemperatur im Wesentlichen fest ist. Die Festpaste kann bei Raumtemperatur eine Konsistenz aufweisen, die etwa der Konsistenz gefrorener Butter vergleichbar ist. Somit unterscheiden sich Festpasten deutlich von Emulsionen, die bei Raumtemperatur regelmäßig emulgiert bzw. flüssig sind. Es ist erfindungsgemäß nicht vorgesehen, die Festpaste in den flüssigen Aggregatzustand zu überführen. Die Festpaste kann durch Erwärmen in die erweichte Paste überführt werden. Aufgrund ihrer Zusammensetzung weist die Festpaste üblicherweise einen breiten Schmelzbereich auf, es gibt also im Normalfalle keine fixe Temperatur, bei der ein abrupter Wechsel des Aggregatzustands von fest zu flüssig erfolgt.

In chemischer Hinsicht kann es sich bei der Festpaste insbesondere um eine Formulierung auf Basis von Lipiden handeln. Lipide können insbesondere Fette, Öle und Wachse und entsprechende Mischungen umfassen. Die Lipide in der Festpaste können auch als Trägerwerkstoff bezeichnet werden. In den Trägerwerkstoff können Additive eingebracht sein. Ferner kann der Trägerwerkstoff mit Abrasivstoffen, also mit Polierstoffen oder Poliermitteln zur mechanischen Oberflächenbearbeitung, durchmischt sein. Die Abrasivstoffe sind insbesondere dem Trägerwerkstoff fein verteilt beigemischt, insbesondere möglichst gleichmäßig verteilt. Abrasivstoffe können allgemein auch als Schleifkorn bzw. Schleifmittel bezeichnet werden.

Der Durchmischungsgrad kann die Homogenität der Durchmischung kennzeichnen. Der Begriff "Homogenität" soll jedoch nicht im chemisch/physikalischen Sinne einschränkend verstanden werden. Vielmehr soll die Homogenität der Durchmischung die Gleichverteilung der (festen) Partikel des Abrasivstoffs im Trägerwerkstoff bezeichnen. In diesem Sinne kann sich eine hohe Homogenität insbesondere dann ergeben, wenn die Partikel jedenfalls statistisch gleichmäßig verteilt sind und etwa im Wesentlichen konstante Abstände zu ihren Nachbarpartikeln haben. Es versteht sich, dass sich im Hinblick auf die Durchmischung bei der Herstellung der Festpaste schon rein verfahrensbedingt gewisse Inhomogenitäten ergeben können, etwa durch (Teil-)-Sedimentierungen bei der Formulierung der Festpaste. Auch ein solcher Durchmischungsgrad wird dann im Wesentlichen beibehalten, wenn die Paste, die durch Erwärmen der Festpaste gewonnen wird, lediglich erweicht oder angeschmolzen wird. Dies beinhaltet insbesondere, dass der Trägerwerkstoff nicht vollständig aufgeschmolzen wird.

Gemäß einer weiteren Ausgestaltung des Verfahrens weist die Festpaste bei Raumtemperatur eine im Wesentlichen steife bis elastische Konsistenz auf, wobei die Festpaste durch Erwärmen in einen erweichten Zustand überführbar ist, in dem die erweichte Paste eine im Wesentlichen plastische bis weiche Konsistenz aufweist, insbesondere eine breiige Konsistenz. Aus Veranschaulichungsgründen wird in diesem Zusammenhang beispielhaft auf die deutsche Norm DIN 1045 bzw. die europäische Norm EN 206 verwiesen, die sich mit der Konsistenz von Frischbeton befassen. Gemäß der DIN 1045 liegen etwa für Frischbeton die folgenden Konsistenzklassen vor: steif - plastisch - weich - sehr weich - fließfähig - sehr fließfähig.

Es versteht sich, dass die genannten Bereiche (steif bis plastisch sowie plastisch bis weich) jedenfalls für ein und denselben Festpastentyp keine Überschneidungen aufweisen, wenn etwa zwei verschiedene Zustände betrachtet werden, bei denen ein Zustand der Raumtemperatur und ein anderer Zustand einer erhöhten Temperatur von 50, 70 oder gar 100 °C entspricht. Zur Erweichung kann die Festpaste je nach ihrer Zusammensetzung etwa auf eine Temperatur in einem Bereich zwischen 28 °C und 150 °C gebracht werden. Die Temperatur ist in hohem Maße abhängig vom Schmelzpunkt der verwendeten Lipide.

Die Konsistenz der Festpaste bei Raumtemperatur kann sich demgemäß in einem Bereich bewegen, der gemäß der DIN 1045 als steif bis plastisch bezeichnet wird. Es liegt eine hohe Viskosität bei Raumtemperatur vor. Durch Erwärmen bzw. das Zuführen thermischer Energie kann die Viskosität der Festpaste verringert werden. Die sich ergebende Konsistenz kann in der DIN 1045 in einem Bereich "plastisch-weich" angesiedelt sein. Die erwärmte Paste kann in Grenzen fließfähig sein, wobei eine ausgeprägte Zähflüssigkeit gegeben ist. Der Zustand der erweichten Paste kann etwa auch als pastös bezeichnet werden.

Zur Veranschaulichung der Konsistenz der Festpaste bzw. der erweichten Paste wird ferner folgender Vergleich herangezogen: Wie vorstehend bereits ausgeführt, weist die Festpaste üblicherweise bei Raumtemperatur eine Konsistenz auf, die etwa der Konsistenz tiefgefrorener Butter vergleichbar ist. Die Konsistenz der erweichten Paste kann etwa der Konsistenz von Butter bei Raumtemperatur (bspw. 20 °C oder 25 °C) entsprechen. Auch bei Butter gibt es keinen fix definierten diskreten Schmelzpunkt. Ähnlich wie Butter kann die Festpaste je nach Zusammensetzung einen mehr oder weniger breiten Schmelzbereich aufweisen, in dem die Aggregatzustandsänderung der einzelnen Fraktionen oder Anteile entsprechend vollzogen wird. Die Konsistenz der weichen Paste kann etwa auch mit der Konsistenz von Senf verglichen werden, der in einem Kühlschrank gelagert ist (etwa 8 °C).

Wenn die Paste die gewünschte erweichte Konsistenz aufweist, verhält sie sich einerseits hinreichend fluidisch, um etwa mittels Pumpen gefördert werden zu können. Gleichwohl ist die Paste noch hinreichend zäh bzw. zähflüssig, um ein Sedimentieren des Schleifkorns bzw. der Schleifpartikel weitestgehend zu verhindern.

Gemäß einer weiteren Ausgestaltung erfolgt das Erweichen der Festpaste für die beigemischten Abrasivstoffe im Wesentlichen sedimentationsfrei, wobei die Paste im erweichten Zustand vorzugsweise eine im Wesentlichen homogene Verteilung der beigemischten Abrasivstoffe aufweist. Es versteht sich, dass es sich bei der erweichten Paste im chemisch/physikalischen Sinne um ein heterogenes Gemisch handelt. Jedoch wird angestrebt, dass die Abrasivstoffe bzw. die abrasiv wirksamen Partikel homogen oder zumindest im Wesentlichen homogen in der erweichten Paste verteilt sind. Vorzugsweise sind die Abrasivstoffe in der erweichten Paste im Wesentlichen gleichmä-ßig kolloidal vermischt.

Gemäß einer weiteren Ausgestaltung umfasst der Schritt des Förderns ein Fördern mittels einer Fluidenergiemaschine, insbesondere ein Pumpen mittels einer Pumpeinheit, die für abrasiv wirksame Medien ausgebildet ist. Pumpen bzw. Pumpeinheiten, die für abrasiv wirksame Medien geeignet sind, können etwa auf Wirkprinzipien und Gestaltungsprinzipien beruhen, die bei Betonpumpen bekannt sind. Beispielhaft kann die Pumpeinheit eine Exzenterschneckenpumpe umfassen. Auch Kolbenpumpen sind denkbar. Ein denkbares Gestaltungsprinzip für verschleißbeständige Pumpen, die für abrasiv wirksame Medien ausgestaltet sind, kann darin bestehen, entsprechende Oberflächenbeschichtungen vorzusehen, die hart genug sind, um den abrasiv wirksamen Medien lange genug zu widerstehen. Ein weiteres Wirkprinzip kann darin bestehen, eine Trennung zwischen dem abrasiv wirksamen Medium und wirksamen Kavitäten der Pumpe zu erzeugen. Dies kann beispielsweise dadurch geschehen, dass eine Pumpe indirekt über einen Schlauch oder ein ähnliches Zwischenelement auf das zu fördernde Medium einwirkt. Ein weiterer Ansatz für für abrasive Medien geeignete Pumpen kann darin bestehen, die Pumpe bewusst mit hohem Spiel zwischen den beteiligten Wirkflächen auszuführen. Dies kann etwa bei Kolbenpumpen ein deutliches Spiel zwischen einem Kolben und einer den Kolben umgebenden Zylinderbahn umfassen.

In jüngerer Vergangenheit wurden verschiedene Fortschritte bei der Gestaltung von Pumpen erzielt, die für abrasive Medien geeignet sind. Demgemäß können mit derartigen Pumpen mittlerweile wirtschaftlich vertretbare Standzeiten erzielt werden, so dass die Pumpen wirtschaftlich einsetzbar sind. Dies war in der Vergangenheit lange nicht der Fall. Gemäß einer Ausgestaltung ist die Pumpeinheit zumindest abschnittsweise beheizbar. Auf diese Weise kann sichergestellt werden, dass die erweichte Paste ihre gewünschte Konsistenz jedenfalls insoweit behält, dass ein Fördern möglich ist.

Gemäß zumindest einigen alternative Ausgestaltungen ist es vorstellbar, anstatt einer Pumpe eine pumpenähnliche Auspresseinheit vorzusehen, vergleichbar etwa einer Spritze. Diese könnte etwa nach Art eines Kolbens gestaltet sein, der mit einem Behältnis zusammenwirkt, in dem die Festpaste aufgenommen ist, wobei das Behältnis dann etwa als Zylinder für den Kolben fungieren kann.

Gemäß einer weiteren Ausgestaltung des Verfahrens umfasst der Schritt des Förderns ein Fördern der erweichten Paste entlang zumindest eines zumindest abschnittsweise beheizbaren Förderpfades der Fördereinrichtung. Dies kann beispielsweise über eine zumindest abschnittsweise temperierte Leitung erfolgen. Auch auf diese Weise wird sichergestellt, dass die erweichte Paste während der Verarbeitung bzw. des Transports die gewünschte Konsistenz aufweist.

Gemäß einer weiteren Ausgestaltung des Verfahrens umfasst der Schritt des Bereitstellens ein Bereitstellen eines Gebindes, das ein mit einer erstarrten Menge der Festpaste gefülltes Behältnis umfasst, wobei das Behältnis vorzugsweise mit einer kompakten Menge der Festpaste befüllt ist. Mit anderen Worten kann das Behältnis mit einer einzigen kompakten Menge befüllt sein. Sofern im Rahmen dieser Ausarbeitung von einer "kompakten Menge" die Rede ist, soll darunter eine verdichtete Menge verstanden werden, die vorzugsweise keine großen Zwischenräume oder Hohlräume aufweist. Gleichwohl ist es vorstellbar, dass etwa beim Befüllen des Behältnisses mit einer hinreichend erweichte Masse und einem anschließenden Erstarren der Masse Schrumpfungsrisse entstehen können. Dies steht nicht im Widerspruch zum Begriff "kompakte Menge".

Diese Maßnahme hat den wesentlichen Vorteil, dass das Gebinde bereits beim Hersteller oder Anbieter der Festpaste erzeugt werden kann, indem das Behältnis mit der Festpaste befüllt wird. Dies kann im Rahmen der Herstellung insbesondere ein Abfüllen einer herstellerseitig vollständig oder nahezu vollständig aufgeschmolzenen Festpaste umfassen. Dies kann sich unmittelbar an die Formulierung der Festpaste anschließen, die üblicherweise bei Temperaturen erfolgt, bei denen wesentliche Bestandteile des Trägermaterials, das üblicherweise auf Basis von Lipiden erzeugt wird, flüssig sind. Es ist grundsätzlich auch denkbar, eine nach der ursprünglichen Formulierung zunächst erstarrte Festpaste erneut zu erweichen oder sogar anzuschmelzen, um das Behältnis zu befüllen. Generell kann eine Durchmischung, insbesondere eine mechanische Durchmischung der angeschmolzenen oder geschmolzenen Festpaste vorgesehen sein, um die gewünschte Homogenität der Durchmischung mit den Abrasivstoffen zu gewährleisten.

Im Vergleich zu bekannten stangenartigen oder riegelartigen Formen von Festpasten für die Oberflächenbearbeitung_können sich wesentliche Vorteile ergeben. Zum einen kann das Gebinde direkt beim Kunden verwendet werden, ohne dass die Festpaste in irgendeiner Weise umgelagert oder umgefüllt werden muss. Beispielhaft kann das Gebinde mit der Pumpeneinheit gekoppelt werden.

Im Gebinde können große Mengen der Festpaste bereitgestellt werden. So kann das Gebinde beispielsweise Fässer oder fassartige Behältnisse umfassen, die Gewichte von mehreren 100 Kilogramm bis hin zu 800 oder gar 1000 Kilogramm umfassen. Demgemäß muss ein Wechsel des Gebindes in der Bearbeitungsanlage wesentlich seltener als etwa ein Wechsel eines Festpastenriegels erfolgen. Da die Festpasten üblicherweise über lange Zeiträume lagerfähig sind, ergibt sich hieraus kein Nachteil. Ein weiterer Vorteil kann darin bestehen, dass ein einziges Gebinde dazu genutzt wird, eine Mehrzahl von Fertigungsanlagen, also etwa eine Mehrzahl von Polierscheiben gemäß den oben beschriebenen Aspekten des Verfahrens mit der erweichten Paste zu versorgen. Es kann sich eine zentrale Pastenversorgung für eine Mehrzahl von Bearbeitungseinrichtungen ergeben.

Gemäß einer Weiterbildung dieser Ausgestaltung wird die Festpaste direkt im Behältnis verarbeitet, insbesondere im Behältnis erweicht sowie durch die Pumpeneinheit aus dem Behältnis gefördert. Zu diesem Zweck kann das Behältnis mit einer Heizeinrichtung gekoppelt werden, die die im Behältnis vorgesehene Menge der Festpaste zumindest abschnittsweise erwärmt. Vorzugsweise koppelt eine Saugseite der Pumpeinheit direkt an das Gebinde bzw. an die im Behältnis erweichte Festpaste an. Beispielhaft ist es denkbar, die Pumpeneinheit als sog. Fassfolgeplatten mit Pumpe auszuführen. Die Fassfolgeplatte kann dazu ausgestaltet sein, mit einem abnehmenden Füllvolumen tiefer in das Gebinde abgesenkt zu werden, etwa um einer Oberfläche der verbleibenden Festpaste zu folgen. Demgemäß kann ein gewünschte Kontakt der Pumpe mit der (teilweise erweichten) Festpaste gewährleistet werden. Mittels einer solchen Pumpeinheit, die in besonderer Weise an die Art des Behältnisses angepasst ist, kann die Paste direkt aus dem Behältnis gefördert und unter Druck weitergeleitet werden.

Üblicherweise kann eine Fassfolgeplattenpumpe mit einer entsprechenden Zugangsöffnung des Behältnisses, etwa mit einer Öffnung eines Fasses, gekoppelt werden, um darin aufgenommene Güter "von oben" zu fördern bzw. abzutragen. Die Fassfolgeplattenpumpe kann ferner ein Handhabungssystem umfassen, das sicherstellt, dass die Pumpe auf ein aktuelles Höhenniveau der im Behältnis verbliebenen Güter abgesenkt wird. Es versteht sich, dass die oben verwendeten Begriffe "von oben" bzw. "Höhenniveau" entsprechend auf andere Orientierungen übertragen werden können, wenn das Gebinde eine andere Lage aufweist bzw. die Pumpeinheit eben nicht "von oben" an das Behältnis angekoppelt werden soll.

Gemäß einer weiteren Ausgestaltung des Verfahrens umfasst der Schritt des Auftragens ein Ausbringen der Paste durch eine Düse, die an das Bearbeitungswerkzeug angepasst ist. Das Ausbringen der Paste kann insbesondere kontinuierlich oder quasi-kontinuierlich erfolgen. Es ist auch ein intervallweises Ausbringen vorstellbar. Insbesondere kann die Düse bzw. eine Düsenöffnung an eine Werkzeugbreite angepasst sein. Vorzugsweise handelt es sich bei der Düse um eine sog. Breitschlitzdüse. Die Düse kann etwa einen geeigneten Übergang zwischen einer im Wesentlichen rund gestalteten Eingangsleitung und einer flachen Ausgangsöffnung gewährleisten.

Andere Arten von Düsen sind denkbar. Gemäß einer weiteren Ausgestaltung des Verfahrens umfasst der Schritt des Auftragens ein Aufbringen der Paste durch eine Hochdruckdüse, die vom Bearbeitungswerkzeug beabstandet ist. Bei der Düse kann es sich um eine Hochdruckdüse handeln, durch die die erweichte Paste mit hohem Druck ausgebracht (gespritzt) wird. Dies kann etwa bei einer Hochdruckdüse mit Drücken erfolgen, die etwa 12 bar, 16 bar, 20 bar, 36 bar oder gar höhere Drücke bzw. Überdrücke umfassen können. Auch wenn die Paste im erweichten Zustand eine breiige oder pastöse Konsistenz aufweist, kann durch die hohen Drücke ein sicherer Übertritt auf das Bearbeitungswerkzeug gewährleistet werden.

Gemäß einer weiteren Gestaltung des Verfahrens umfasst der Schritt des Auftragens ein Ausbringen der Paste auf ein Leitelement, insbesondere auf eine Pressleitplatte, das in einem Umfangsbereich des Bearbeitungswerkzeugs angeordnet ist, wobei sich auf dem Leitelement befindliche Paste vom Bearbeitungswerkzeug mitgenommen wird. Vorzugsweise ist das Leitelement an den Umfangsbereich des Bearbeitungswerkzeugs angepasst. Vorzugsweise ist das Leitelement mit einer Düse, insbesondere einer Breitschlitzdüse, gekoppelt. Mit anderen Worten kann die Düse im Leitelement münden. Das Leitelement kann zumindest zeitweise zumindest abschnittsweise vom Bearbeitungswerkzeug kontaktiert werden, wenn das Bearbeitungswerkzeug Teilmengen der Paste vom Leitelement übernimmt. Das Leitelement kann zumindest intervallartig oder periodisch in Kontakt mit dem Bearbeitungswerkzeug gebracht werden. Das Leitelemenet kann hierbei zumindest teilweise in eine Oberfläche der (hinreichend weichen) Bearbeitungswerkzeugs eindringen, um dort die Paste abzugeben. Mit anderen Worten kann das Leitelement mit leichtem Druck zur Anlage an das Bearbeitungswerkzeug gebracht werden. Der Vorgang des Übertragens der Paste auf das Bearbeitungswerkzeug kann allgemein als "Einmassieren" bezeichnet werden. Beispielhaft kann das Auftragen in Intervallen erfolgen, die etwa aller 60 Sekunden einen Kontakt mit einer Dauer von 1 bis 3 Sekunden umfassen können. Es versteht sich, dass dies nur ein beispielhafter Modus ist. Viele verschiedene Modi für das Auftragen sind denkbar.

Beispielhaft kann das Leitelement mit dem Umfangsbereich des Bearbeitungswerkzeugs einen sich verjüngenden Spalt ausbilden, an dessen Ende eine Engstelle oder Kontaktstelle zwischen dem Leitelement und dem Bearbeitungswerkzeug vorgesehen ist. Die Engstelle bzw. Kontaktstelle kann an dem Ende des Spalts ausgebildet sein, das in Drehrichtung des Bearbeitungswerkzeugs vom anderen Ende versetzt ist.

Die Paste kann durch die Düse ausgebracht und zumindest teilweise am Leitelement abgelagert werden, ohne dass das Ausbringen mit hohem Überdruck oder gar Hochdruck erfolgen muss. Vielmehr kann eine breiige oder pastöse Masse derart auf dem Leitelement abgelagert werden, dass das Auftragen auf das Bearbeitungswerkzeug im Wesentlichen durch eine Mitnahme bzw. ein Abgreifen vom Leitelement erfolgt. Mit anderen Worten ist es bei dieser Ausgestaltung nicht unbedingt erforderlich, dass die Paste mit einem derart hohen Druck ausgebracht werden muss, dass eine definierte Lücke zwischen der Düse und dem Umfang des Bearbeitungswerkzeugs etwa durch Spritzen der Paste überbrückt werden kann.

Vorzugsweise ist das Leitelement als Verschleißteil ausgebildet. Dies kann insbesondere beinhalten, dass das Leitelement einfach auswechselbar ist. Demgemäß ist es nicht von wesentlichem Nachteil, wenn auch das Leitelement selbst einem abrasiven Verschleiß unterliegt, wenn das Bearbeitungswerkzeug die Paste vom Leitelement mitnimmt.

Gemäß den vorgeschlagenen bevorzugten Gestaltungen der Düse und des Leitelements kann sich der wesentliche Vorteil ergeben, dass deutlich weniger Verluste beim Auftragen der Paste auftreten. Insbesondere wird eine geringere Menge der Paste vom Bearbeitungswerkzeug weggeschleudert. Somit kann auch die Verschmutzungsneigung deutlich verringert werden.

Sowohl die Düse als auch das Leitelement können in bestimmter Weise mit einem Vorschubantrieb bzw. Nachführantrieb versehen sein, um etwa einen Verschleiß beim Bearbeitungswerkzeug auszugleichen, der sich in einer kontinuierlichen Umfangsreduzierung des Bearbeitungswerkzeugs widerspiegeln kann.

Gemäß einer weiteren Ausgestaltung des Verfahrens umfasst der Schritt des Auftragens ein Ausbringen der Paste durch eine Öffnung mit einem definierten Querschnitt, der als Matrize für die auszubringende Paste gestaltet, wobei die Dosiereinrichtung dazu ausgestaltet ist, die erweichte Paste in Zusammenhang mit dem Ausbringen derart abzukühlen, dass die Paste nahe der Öffnung zumindest teilweise erstarrt und vorzugsweise als extrudierte Stange oder als extrudierter Riegel ausgefahren wird. Demnach kann die wieder als Festpaste vorliegende Paste in grundsätzlich bekannter Weise in Kontakt mit dem Bearbeitungswerkzeug treten, wodurch dieses Teilmengen der Festpaste durch Reibungswärme erweichen und abtragen kann.

Den Aspekt des Bearbeitungsverfahrens betreffend wird die Aufgabe der Erfindung durch ein Verfahren zur Oberflächenbearbeitung_von Werkstücken gelöst, das die folgenden Schritte umfasst:
- Bereitstellung eines Bearbeitungswerkzeugs, insbesondere einer Polierscheibe oder Bürste,
- Ausbringen einer Festpaste zur Oberflächenbearbeitung auf das Bearbeitungswerkzeug gemäß zumindest einem der vorstehend genannten Aspekte, und
- Bearbeiten, insbesondere Schleifen oder Polieren, eines Werkstücks mit dem Bearbeitungswerkzeug, auf das die Paste aufgebracht ist.

Auch auf diese Weise wird die Aufgabe der Erfindung vollständig gelöst.

Das Bearbeitungsverfahren kann durch zumindest einen der folgenden Schritte weitergebildet sein:
- automatisiertes Bearbeiten einer Mehrzahl von Werkstücken, die mittels einer Handhabungseinrichtung zu Bearbeitungszwecken nacheinander in Kontakt mit dem Bearbeitungswerkzeug gebracht werden, und
- Ausbringen der Festpaste zur Oberflächenbearbeitung auf das Bearbeitungswerkzeug.

Bei der Handhabungseinrichtung kann es sich etwa um einen Roboter handeln. Auch Handhabungseinrichtungen in Form von Rundtakttischen sind denkbar. Es versteht sich, dass eine Mehrzahl von Handhabungseinrichtungen miteinander kombiniert werden können.

Bei der Handhabungseinrichtung kann es sich insbesondere um eine Handhabungseinrichtung handeln, die einen Handhabungsroboter aufweist. Die Festpaste kann grundsätzlich intervallmäßig (periodisch) auf das Bearbeitungswerkzeug aufgebracht werden. Dies kann feste oder flexible Intervalle umfassen.

Typische Polierbearbeitungsprozesse können sich etwa auf das Polieren von Metall beziehen. Metalle können einerseits poliert werden, um eine gewünschte Endgestalt zu erzielen, insbesondere einen gewünschten Glanzgrad. Poliervorgänge können jedoch auch als Zwischenbearbeitungsschritt erforderlich sein. Beispielhaft kann mittels abrasiver Bearbeitungsvorgänge, die natürlich auch Schleifvorgänge oder Bürstenvorgänge betreffen können, eine Vorbereitung eines Werkstücks für eine Galvanisierung, etwa eine Verchromung oder einen ähnlich gelagerten Bearbeitungs- und/oder Beschichtungsprozess durchgeführt werden. Dies kann insbesondere auch das Entfernen und/oder Einebnen von Graten, insbesondere von Stanzgraten oder sonstigen Bearbeitungsgraten, umfassen. Es versteht sich, dass auch nicht-metallische Oberflächen sowie beschichtete bzw. lackierte Oberflächen mit entsprechenden Bearbeitungswerkzeugen bearbeitet werden können, insbesondere poliert werden können.

Ein weiterer vorteilhafter Aspekt des Bearbeitungsverfahrens kann darin bestehen, dass eine Mehrzahl von Bearbeitungsplätzen bzw. Bearbeitungsanlagen zentral mit der Festpaste versorgt wird.

Die Vorrichtung betreffend wird die Aufgabe der Erfindung durch eine Vorrichtung zum Ausbringen von Festpasten zur Oberflächenbearbeitung auf ein Bearbeitungswerkzeug gemäß dem unabhängigen Vorrichtungsanspruch gelöst.

Auch auf diese Weise wird die Aufgabe der Erfindung vollständig gelöst.

Ein weiterer vorteilhafter Aspekt der vorliegenden Offenbarung bezieht sich auf ein System zur automatisierten Bearbeitung von Werkstücken gemäß dem Systemanspruch gelöst.

Es ist gemäß zumindest einiger Ausgestaltungen bevorzugt, wenn mehrere Bearbeitungsplätze oder Bearbeitungszellen vorgesehen sind, die jeweils ein Bearbeitungswerkzeug und eine automatisierte Handhabungseinrichtung aufweisen, wobei die Versorgung mit der Festpaste durch lediglich eine Ausbringvorrichtung mit entsprechenden Dosiereinrichtungen bereitgestellt wird. Es versteht sich, dass die Fördereinrichtung demgemäß eine Mehrzahl von Förderpfaden aufweist.

Die Verwendung betreffend wird die Aufgabe der Erfindung durch eine Verwendung einer Festpaste zur Oberflächenbearbeitung gemäß dem unabhängigen Verwendungsanspruch gelöst.

Auch auf diese Weise wird die Aufgabe der Erfindung vollständig gelöst.

Weitere Merkmale und Vorteile der Erfindung ergeben sich aus der nachfolgenden Beschreibung bevorzugter Ausführungsbeispiele unter Bezugnahme auf die Zeichnungen. Es zeigen:
- Fig. 1: eine stark vereinfachte schematische Ansicht eines Systems zur Oberflächenbearbeitung von Werkstücken;
- Fig. 2: eine vergrößerte schematische Teilansicht einer Ausgestaltung einer Düse bzw. eines Leitelements, die beim System gemäß Fig. 1 verwendbar sind;
- Fig. 3: eine vereinfachte schematische perspektivische Ansicht der Gestaltung gemäß Fig. 2;
- Fig. 4: eine vereinfachte schematische Ansicht einer weiteren Ausgestaltung einer Düse, die beim System gemäß Fig. 1 verwendbar ist;
- Fig. 5: eine vereinfachte schematische Ansicht einer Dosiereinrichtung mit einem Ausbringelement zum Ausbringen einer Stange einer wiedererstarrten Festpaste;
- Fig. 6: eine vereinfachte schematische Ansicht von Funktionsblöcken einer weiteren Ausgestaltung eines Systems zur Oberflächenbearbeitung_von Werkstücken;
- Fig. 7: eine schematische Blockdarstellung eines Ausführungsbeispiels eines Verfahrens zum Ausbringen von Festpasten zur Oberflächenbearbeitung auf ein Bearbeitungswerkzeug; und
- Fig. 8: eine schematische Blockdarstellung eines Ausführungsbeispiels eines Verfahrens zur Oberflächenbearbeitung_von Werkstücken.

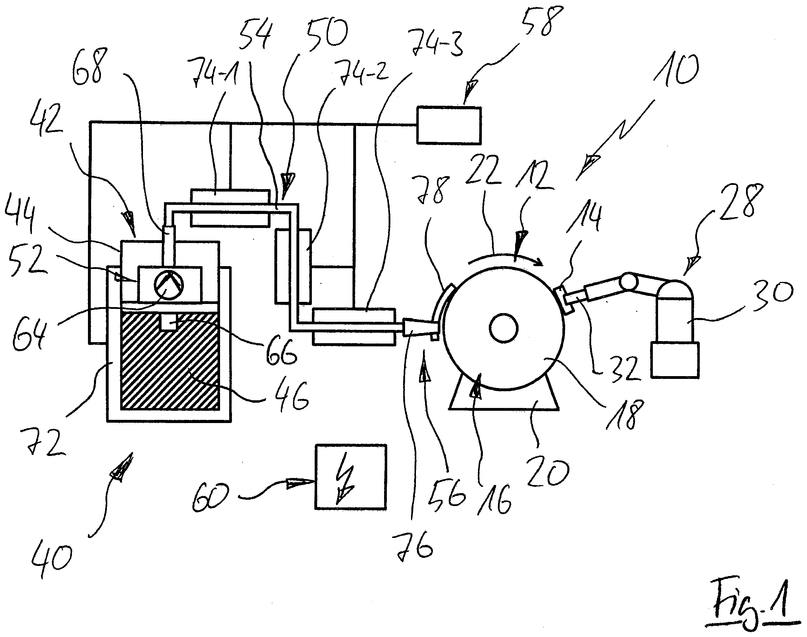

Fig. 1 zeigt in stark vereinfachter schematischer Darstellung ein System 10 zur Oberflächenbearbeitung_von Werkstücken 14, insbesondere zur Schleifbearbeitung und/oder Polierbearbeitung. Das System 10 kann gemäß verschiedenen der hierin beschriebenen Aspekte gestaltet sein bzw. zur Durchführung von Verfahren gemäß zumindest einigen der hierin beschriebenen Aspekte ausgebildet sein.

Das System 10 weist zumindest eine Bearbeitungsvorrichtung 12 auf, die mit dem Werkstück 14 zu dessen Bearbeitung zusammenwirken kann. Die Bearbeitungsvorrichtung 12 weist insbesondere zumindest ein Bearbeitungswerkzeug 16 auf, das etwa als Rad oder Scheibe 18 ausgestaltet sein kann. Bei dem Bearbeitungswerkzeug 16 kann es sich insbesondere um eine Polierscheibe, Bürste oder Schleifscheibe handeln. In grundsätzlich bekannter Weise kann das Bearbeitungswerkzeug 16 mit einem Gestell und einem Antrieb versehen sein (in Fig. 1 lediglich blockartig dargestellt und mit 20 bezeichnet). Demgemäß kann das Bearbeitungswerkzeug 16 in eine Bewegung versetzt werden, insbesondere in eine Rotationsbewegung, vgl. einen mit 22 bezeichneten Pfeil in Fig. 1.

Grundsätzlich könnte das Werkstück 14 manuell in Kontakt mit dem Bearbeitungswerkzeug 16 gebracht werden, um das Werkstück 14 zu bearbeiten, insbesondere zu polieren. Insbesondere im Rahmen industrieller Anwendungen ist es jedoch bevorzugt, zumindest eine Handhabungseinrichtung 28 vorzusehen, die etwa einen Roboter 30 umfassen kann. Die Handhabungseinrichtung 28 kann zumindest einen Greifer 32 umfassen, der dazu ausgebildet ist, das Werkstück 14 zu greifen und zu halten. Die Handhabungseinrichtung 28 kann dazu ausgebildet sein, zu bearbeitende Werkstücke 14 (Rohteile) zu greifen und in gewünschter Weise auf das Bearbeitungswerkzeug 16 zuzuführen. Insbesondere kann die Handhabungseinrichtung 28 ferner dazu ausgebildet sein, während des Kontakts oder Eingriffs zwischen dem Werkstück 14 und dem Bearbeitungswerkzeug 16 definierte Relativbewegungen des Werkstücks 14 gegenüber dem Bearbeitungswerkzeug 16 zu erzeugen, um das Werkstück 14 in gewünschter Weise zu glätten bzw. zu schleifen oder zu polieren.

Die Oberflächenbearbeitung_erfolgt unter Hinzunahme von Poliermitteln, mit denen das Bearbeitungswerkzeug 16 versetzt wird. Somit ist es erforderlich, das Schleifmittel, Bürstmittel oder Poliermittel definiert in gewünschten Mengen auf das Bearbeitungswerkzeug 16 aufzubringen.

Zu diesem Zweck weist das System 10 eine Vorrichtung 40 auf, die zur Ausbringung von Festpasten zur Oberflächenbearbeitung gemäß verschiedenen Aspekten dieser Offenbarung ausgebildet ist. Die Vorrichtung 40 kann dazu ausgebildet sein, mit einem Gebinde 42 zusammenzuwirken, das etwa fassartig oder kanisterartig gestaltet sein kann. Das Gebinde 42 kann ein Behältnis 44 umfassen, in dem eine kompakte Menge einer Festpaste 46 aufgenommen ist. Wie vorstehend bereits beschrieben, weist die Festpaste 46 bei Raumtemperatur eine im Wesentlichen feste Konsistenz auf, die etwa der Konsistenz tiefgefrorener Butter entsprechen kann. Demgemäß kann die Festpaste jedenfalls bei Raumtemperatur nicht ohne weiteres gefördert und verarbeitet werden. Die Festpaste 46 kann einen Trägerwerkstoff enthalten, der im Wesentlichen aus Lipiden gebildet ist, insbesondere aus Fetten, Ölen, Wachsen sowie aus Mischungen hiervon. Dem Trägerwerkstoff können abrasiv wirksame Abrasivstoffe beigemischt sein. Das Behältnis 44 kann etwa als Mehrwegfass gestaltet sein. Insbesondere kann das Behältnis 44 als Druckbehälter ausgeführt sein.

Das System 10 weist ferner eine Fördereinrichtung 50 auf, die grundsätzlich dazu ausgebildet ist, die Festpaste 46, sofern sie in einen hinreichend förderfähigen Zustand überführt worden ist, dem Bearbeitungswerkzeug 16 zuzuführen. Die Fördereinrichtung 50 kann insbesondere eine Pumpeinheit 52 umfassen. Ferner kann die Fördereinrichtung 50 einen Förderpfad 54 umfassen, der etwa zumindest eine Leitung aufweist, die zwischen dem Gebinde 42 und dem Bearbeitungswerkzeug 16 angeordnet ist. Die Leitung kann zumindest abschnittsweise aus Rohren und/oder zumindest abschnittsweise aus Schläuchen gebildet sein. Ferner weist das System 10 eine Dosiereinrichtung 56 auf, die dazu ausgebildet ist, eine erweichte Paste, die der Festpaste 46 im Gebinde 42 entnehmbar ist, definiert in gewünschter Menge an das Bearbeitungswerkzeug 16 abzugeben.

Daneben kann das System 10 eine Heizeinrichtung 58 aufweisen, die dazu ausgebildet ist, zumindest Teilmengen der Festpaste 46 definiert zu erwärmen, um diese in einen erweichten Zustand zu überführen, insbesondere in einen breiigen Zustand oder pastösen Zustand. Die Heizeinrichtung 58 kann grundsätzlich mit dem Gebinde 42, der Fördereinrichtung 50, der Pumpeneinheit 52 und/oder der Dosiereinrichtung 56 gekoppelt sein, um zu gewährleisten, dass die erweichte Paste während ihres gesamten Weges zwischen dem Gebinde 42 und dem Bearbeitungswerkzeug eine gewünschte Konsistenz umfasst. Grundsätzlich ist es auch vorstellbar, dass die Heizeinrichtung 50 vorrangig auf die im Gebinde 42 vorgesehene Festpaste 46 einwirkt, um diese zumindest abschnittsweise zu erweichen. Sofern sichergestellt wird, dass die erweichte Paste hiernach nicht so weit abkühlt, dass sie erstarrt oder zumindest weniger fließfähig wird, so dass gegebenenfalls Funktionsausfälle oder gar Schäden für die Ausbringvorrichtung 40 drohen, kann die Heizeinrichtung 58 lediglich auf Teilabschnitte der Ausbringvorrichtung 40 einwirken. Die Ausbringvorrichtung 40 kann ferner eine Steuereinrichtung 60 umfassen, die verschiedene Funktionen der beteiligten Komponenten steuern und regeln kann.

Die Pumpeneinheit 52 kann zumindest eine Pumpe 64 umfassen, die einen Einlass 66 und einen Auslass 68 umfassen kann. Die Pumpe 64 kann beispielsweise als Fassfolgepumpe ausgestaltet sein und direkt mit dem Gebinde 42 zusammenwirken, um Teile der Festpaste 46 aus dem Gebinde zu fördern. Der Auslass 68 der Pumpe kann mit dem zumindest einen Förderpfad 54 gekoppelt sein.

Die Heizeinrichtung 58 kann zumindest eine Heizeinheit 72, 74 aufweisen. Vorzugsweise dient etwa die Heizeinheit 72 dazu, zumindest eine Teilmenge der Festpaste 46 im Behältnis 44 zu erwärmen. Insbesondere kann die Heizeinheit 72 mit der Pumpe 64 gekoppelt sein bzw. nahe der Pumpe 64 angeordnet sein, um sicherzustellen, dass die Festpaste 46 im Bereich des Einlasses 66 der Pumpe 64 hinreichend erweicht ist.

Die Heizeinheit 74 kann Elemente 74-1, 74-2, 74-3 umfassen. Insbesondere kann die Heizeinheit 74 dazu ausgebildet sein, die erweichte Paste auf ihrem Weg entlang des Förderpfades 54 in gewünschter Weise zu temperieren. Auf diese Weise wird sichergestellt, dass sich die erweichte Paste hinreichend "fluidisch" verhält, wenn sie die Dosiereinrichtung 56 verlässt. Es versteht sich, dass auch die Dosiereinrichtung 56 temperiert und demgemäß mit einer Heizeinheit versehen oder gekoppelt sein kann.

Die Dosiereinrichtung 56 kann insbesondere eine Düse 76 umfassen. Die Düse 76 kann eine Ausbringöffnung für die erweichte Paste umfassen. Vorzugsweise ist die Düse 76 als Breitschlitzdüse ausgeführt. Die Düse 76 kann in vorteilhafter Weise mit einem Leitelement 78 gekoppelt sein, das eine vereinfachte Mitnahme oder Aufnahme der durch die Düse 76 ausgebrachten erweichten Paste durch das Bearbeitungswerkzeug 16 sicherstellt.

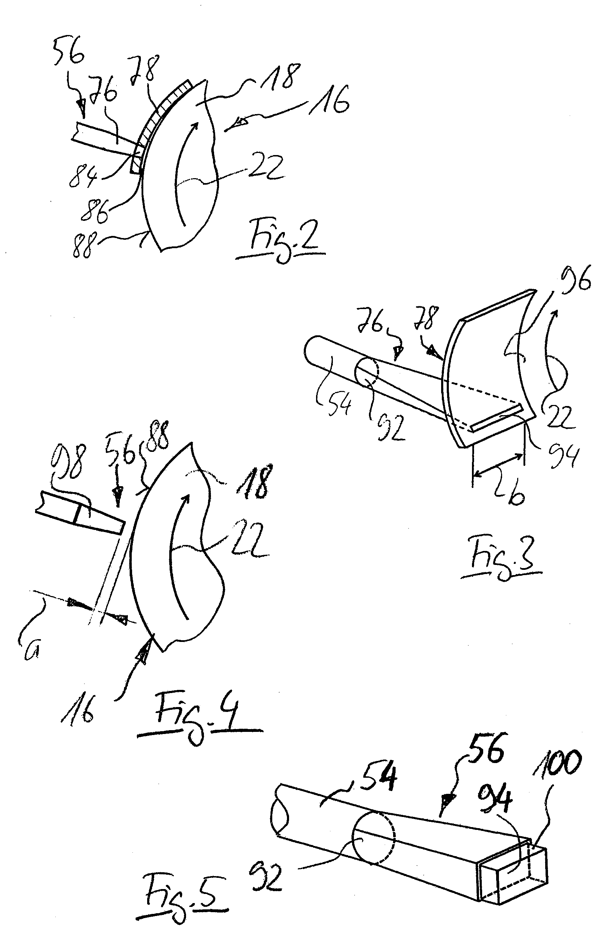

Verschiedene denkbare Ausgestaltungen der Dosiereinrichtung 56 werden anhand der stark vereinfachten schematischen Darstellung gemäß den Fig. 2, 3 und 4 veranschaulicht und näher erläutert. Eine erste Ausgestaltung einer Düse 76 und eines Leitelements 78 wird durch die Fig. 2 und 3 dargestellt. Fig. 2 ist entnehmbar, dass das Leitelement 78 in bestimmter Weise an das Bearbeitungswerkzeug 16 angepasst sein kann, insbesondere an einen Umfang 88 des Bearbeitungswerkzeugs 16. Vorzugsweise kontaktiert das Leitelement 78 den Umfang 88 zumindest näherungsweise tangential. Das Leitelement 78 kann etwa rohrabschnittsförmig oder schutzblechartig gestaltet sein. Das Leitelement 78 kann alternativ auch als etwa plattenförmiges Teil gestaltet sein. Es ist nicht erforderlich, dass das Leitelement 78 permanent in Kontakt mit dem Umfang 88 des (sich drehenden) Bearbeitungswerkzeugs 16 steht. Jedoch kann das das Leitelement 78 zumindest abschnittsweise in Kontakt mit dem Bearbeitungswerkzeug 16 gebracht werden, um die Paste an dieses abzugeben bzw. in dieses einzumassieren.

Das Leitelement 78 kann auch als Leitplatte oder Pressleitplatte bezeichnet werden. Das Leitelement 78 und der Umfang 88 des Bearbeitungswerkzeugs 16 können gemeinsam einen Spalt 86 definieren, der sich in Richtung auf ein von der Austrittsöffnung 84 der Düse 76 im Leitelement 78 in der Drehrichtung versetzten Ende hin verjüngt. Somit kann die erweichte Paste definiert durch die Austrittsöffnung 84 ausgebracht werden und durch die Bewegung des Bearbeitungswerkzeugs 16 (Pfeil 22) in den Spalt 86 hineingedrängt werden, um schließlich vom Bearbeitungswerkzeug 16 zumindest teilweise mitgenommen zu werden. Auf diese Weise kann sichergestellt werden, dass ein hoher Anteil der ausgebrachten erweichten Paste tatsächlich auch auf das Bearbeitungswerkzeug 16 übertragen wird. Verluste, insbesondere Schleuderverluste und damit einhergehende Belastungen, können minimiert werden. Allgemein ist es bevorzugt, wenn das Leitelement 78 - jedenfalls während des definierten Kontakts mit dem Bearbeitungswerkzeug 16 - zumindest abschnittsweise flächig an diesem anliegt, insbesondere mit Druck am Bearbeitungswerkzeug 16 anliegt. Insbesondere kann das Leitelement 78 als Verschleißteil oder Verschleißplatte ausgeführt sein. Sofern das Leitelement 78 und das Bearbeitungswerkzeug 16 zumindest zeitweise miteinander in Kontakt treten, ist beim Leitelement 78 mit Verschleiß zu rechnen, je nach Art des verwendeten Werkstoffs. Dem kann in einfacher Weise entgegengewirkt werden, indem das Leitelement 78 austauschbar und bewusst als Verschleißteil gestaltet ist. Alternativ kann das Leitelement 78 bewusst verschleißbeständig gestaltet sein. Dies kann beispielsweise eine Fertigung aus keramischen Werkstoffen umfassen. Beispielhaft ist auch eine Verschleißschutzschicht auf kubischem Bornitrid (CBN) denkbar. Andere verschleißbeständige Werkstoffe oder verschleißbeständige Beschichtungen sind denkbar. Somit kann die Standzeit des Leitelements 78 deutlich verlängert werden.

Fig. 3 zeigt eine perspektivische Ausgestaltung eines korrespondierenden Ausführungsbeispiels der Düse 76 und des Leitelements 78. Bei der Düse 76 kann es sich insbesondere um eine Breitschlitzdüse handeln. Die Breitschlitzdüse 76 ist dazu ausgebildet, einen im Wesentlichen runden Querschnitt 92 in einen dünnen (bzw. niedrigen) aber breiten Querschnitt 94 an der Austrittsöffnung 84 zu überführen. Der runde Querschnitt 92 kann einem Förderquerschnitt im Förderpfad 54 entsprechen. Der Querschnitt 94 ist vorzugsweise an eine Breite b des Bearbeitungswerkzeugs 16 angepasst, um sicherzustellen, dass dieses möglichst über seine gesamte Breite b sicher mit der erweichten Paste versorgt wird. Das Leitelement 78 kann an seiner dem Bearbeitungswerkzeug 16 zugewandten Seite eine Mitnahmefläche 96 aufweisen, von der die erweichte Paste durch das Bearbeitungswerkzeug 16 abgegriffen werden kann.

Fig. 4 veranschaulicht eine alternative Ausgestaltung einer Dosiereinrichtung 56. Die Dosiereinrichtung 56 gemäß Fig. 4 weist eine Hochdruckdüse 98 auf, durch die die erweichte Paste mit einem derart hohen Druck ausgebracht werden kann, dass ein Abstand a zwischen der Hochdruckdüse 98 und dem Umfang 88 des Bearbeitungswerkzeugs 16 ohne weiteres überbrückt werden kann. Auch auf diese Weise kann die erweichte Paste sicher an das Bearbeitungswerkzeug 60 übergeben werden. Auch die Hochdruckdüse 98 kann mit entsprechenden Leitelementen 78 gekoppelt sein, die grundsätzlich den anhand der Fig. 2 und 3 veranschaulichten Ausgestaltungen ähnlich gestaltet sein können. Ferner kann auch die Hochdruckdüse 98 dazu ausgestaltet sein, das Bearbeitungswerkzeug 16 über seine gesamte Breite b zu benetzen bzw. zu versorgen.

Fig. 5 veranschaulicht eine weitere alternative Ausgestaltung einer Dosiereinrichtung 56. Im Gegensatz zu den Ausgestaltungen gemäß den Figuren 2 bis 4 weist die in Fig. 5 gezeigte Dosiereinrichtung 56 keine Düse zum Ausbringen der erweichten Festpaste auf. In bekannter Weise kann die Dosiereinrichtung 56 eine Rohranordnung oder Leitungsanordnung umfassen, die etwa aufgehend vom einen ersten Querschnitt 92 in einem zweiten Querschnitt 94 mündet. Beim zweiten Querschnitt 94 ist eine Ausbringöffnung vorgesehen. Die Leitungsanordnung kann Bestandteil des Förderpfades 54 sein. Der erste Querschnitt 92 kann etwa kreisförmig oder zumindest annähernd kreisförmig gestaltet sein. Der zweite Querschnitt 94 kann nach Art einer Matrize gestaltet sein, insbesondere nach Art einer Extrusionsmatrize. Mit anderen Worten kann nämlich der zweite Querschnitt 94 die Querschnittsabmessung einer wiedererstarrte Festpaste definieren, die durch zumindest teilweises Erstarren und Ausbringen der Paste in der Dosiereinrichtung 56 erzeugt wird. Demgemäß kann die Dosiereinrichtung 56 gemäß Fig. 5 eine Abkühlstrecke umfassen.

Das Erstarren kann aktiv (etwa durch aktive Kühlung) oder passiv (etwa durch Anpassung an eine Umgebungstemperatur) herbeigeführt werden. Idealerweise bleibt die Festpaste in der Dosiereinrichtung 56 (gerade noch) fließfähig und erstarrt in einem engen zeitlichen Zusammenhang mit dem Austritt aus dem zweiten Querschnitt 94. Auf diese Weise kann am Ausgang der Dosiereinrichtung ein Festpastenriegel oder eine Festpastenstange bereitstehen, von der das Bearbeitungswerkzeug 16 (in Fig. 5 nicht separat dargestellt) aufgrund entsprechender Reibung Teilmengen anschmelzen und abtragen kann. Somit kann die Festpaste erweicht werden, um die Handhabung und den Transport zu vereinfachen, und um eine kontinuierliche Bereitstellung ohne große Totzeiten zu ermöglichen. Gleichwohl kann die erweichte Paste durch definiertes Erstarren wiederum aus dem pastösen in den festen Zustand überführt werden, so dass die Übertragung an das Bearbeitungswerkzeug 16 in grundsätzlich bekannter Weise erfolgen kann.

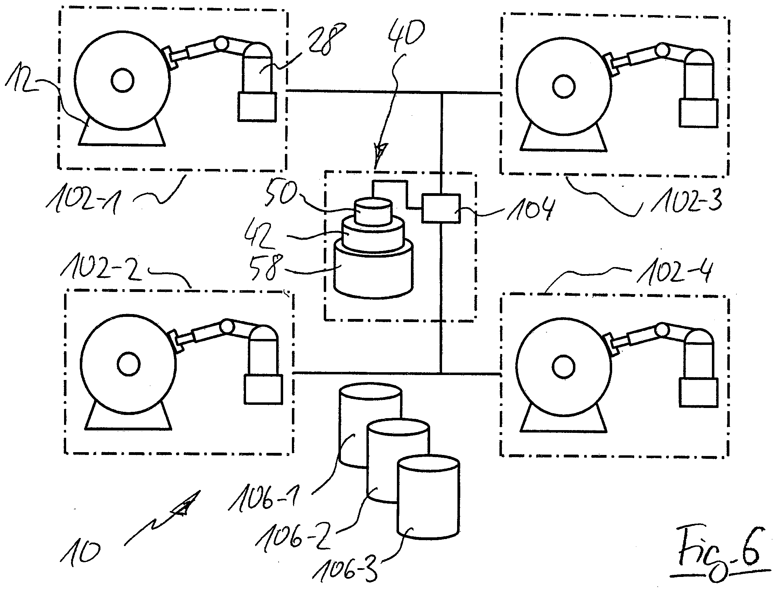

Fig. 6 veranschaulicht eine alternative Ausgestaltung eines Systems 10 zur Oberflächenbearbeitung_von Werkstücken. Im Gegensatz zur Ausgestaltung gemäß Fig. 1 weist das System gemäß Fig. 6 beispielhaft eine Mehrzahl von Bearbeitungszellen 102-1, 102-2, 102-3, 102-4 auf, in denen jeweils eine Bearbeitungsvorrichtung 12 und eine entsprechende Handhabungseinrichtung 28 angeordnet sein können. Das System 10 weist ferner eine zentrale Ausbringvorrichtung 40 für die im Gebinde 42 bereitgestellte Festpaste 46 auf.

Die Ausbringvorrichtung 40 kann grundsätzlich der Gestaltung gemäß Fig. 1 zumindest ähnlich gestaltet sein und ähnliche Komponenten umfassen. Insbesondere kann in grundsätzlich bereits vorstehend beschriebener Weise eine Fördereinrichtung 50 sowie eine Heizeinrichtung 58 vorgesehen sein. Die Ansteuerung der einzelnen Zellen 102-1, 102-2, 102-3, 102-4 kann etwa über einen Verteiler 104 erfolgen, der beispielhaft mit Ventilen oder Ähnlichem versehen ist, um entsprechende Pfade zu den Zellen 102-1, 102-2, 102-3, 102-4 freizugeben oder zu sperren.

In Fig. 6 sind ferner mit 106-1, 106-2, 106-3 beispielhafte Austauschgebinde dargestellt, die dem Gebinde 42 grundsätzlich gleich gestaltet sind. Die Austauschgebinde 106-1, 106-2, 106-3 können etwa als mit Fassfolgepumpen kompatible Fässer gestaltet sein. Sofern festgestellt wird, dass das Gebinde 42 restentleert oder nahezu restentleert ist, kann ein entsprechender Austausch durch ein Austauschgebinde 106 erfolgen. Das System 10 gemäß Fig. 6 könnte etwa dahingehend erweitert werden, dass die Ausbringvorrichtung 40 dazu ausgestaltet ist, gleichzeitig mit zwei Gebinden 42 zusammenzuwirken. Auf diese Weise könnte sichergestellt werden, dass stets ein Gebinde 42 zur Verfügung steht, in dem noch genügend Festpaste 46 vorgesehen ist. Auf diese Weise könnten Leerzeiten für das Wechseln des Gebindes vermieden werden.

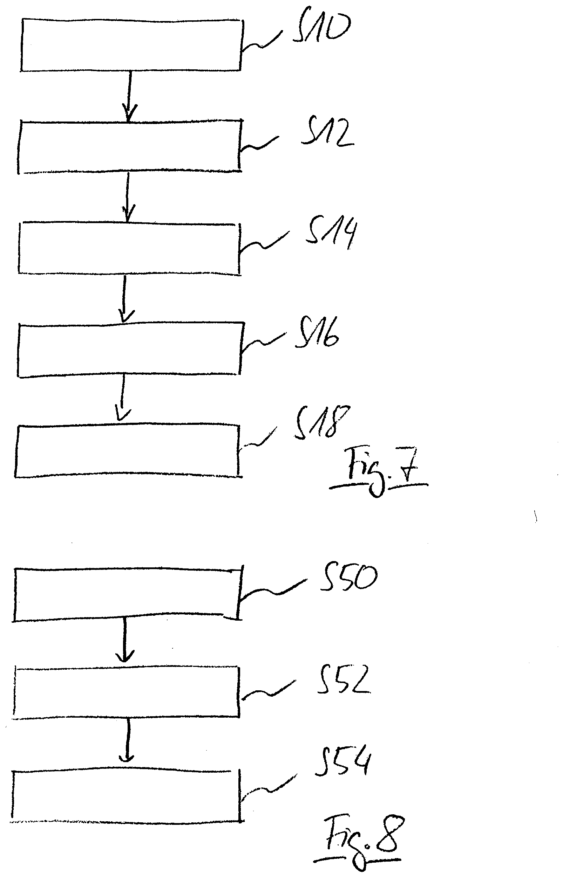

Fig. 7 veranschaulicht in vereinfachter Weise anhand eines schematischen Blockdiagramms ein Ausführungsbeispiel eines Verfahrens zum Ausbringen von Festpasten zur Oberflächenbearbeitung auf ein Bearbeitungswerkzeug. Das Verfahren kann einen Schritt S10 umfassen, der die Bereitstellung einer Festpaste zur Oberflächenbearbeitung umfasst, insbesondere die Bereitstellung eines Gebindes mit der Festpaste. In einem nachgelagerten Schritt S12 kann zumindest eine Teilmenge der Festpaste durch Erwärmung erweicht werden. Im Schritt S12 wird jedoch angestrebt, dass ein Durchmischungsgrad der Paste mit Abrasivstoffen beibehalten wird. Vorzugsweise wird die Festpaste bereits im Gebinde erweicht. Es kann sich ein Schritt S14 anschließen, der ein Fördern, insbesondere ein Pumpen, der erweichten Paste aus dem Gebinde beinhalten kann. Zu diesem Zweck kann das Gebinde mit einer Pumpeinheit gekoppelt werden, vorzugsweise mit einer Fassfolgepumpe. In einem nachgelagerten Schritt S16 kann die erweichte Paste über einen Förderpfad zu einer Dosiereinrichtung gefördert werden. Dies kann zumindest in einigen Ausgestaltungen unter weiterer Zuführung thermischer Energie erfolgen, um zu verhindern, dass die erweichte Paste erstarrt. In einem weiteren Schritt S18 kann die erweichte Paste etwa durch eine Düse der Dosiereinrichtung ausgebracht und schlussendlich auf ein Werkzeug zur Oberflächenbearbeitung_aufgetragen werden. Dies kann etwa durch Mitnahme oder Übernahme der erweichten Paste durch das Werkzeug von einem Leitelement erfolgen.

Fig. 8 veranschaulicht in vereinfachter Weise anhand eines schematischen Blockdiagramms ein Ausführungsbeispiel eines Verfahren zur Oberflächenbearbeitung von Werkstücken, insbesondere zum Schleifen, Bürsten oder Polieren. Das Verfahren kann einen Schritt S50 umfassen, der im Wesentlichen die Bereitstellung eines Bearbeitungswerkzeugs beinhaltet, insbesondere die Bereitstellung einer Polierscheibe oder Bürste, die dazu ausgebildet ist, eine Festpaste zur Oberflächenbearbeitung in einen erweichten Zustand aufzunehmen und mit dieser auf ein Werkstück glättend einzuwirken.

Es kann sich ein Schritt S52 anschließen, der ein Ausbringen einer Festpaste zur Oberflächenbearbeitung auf das Bearbeitungswerkzeug beinhaltet. Das Ausbringen kann ein Aufbringen einer erweichten Paste beinhalten. Insbesondere kann das Ausbringen gemäß dem anhand der Fig. 7 erläuterten Verfahren und/oder gemäß zumindest einigen anderen Aspekten des im Rahmen dieser Offenbarung beschriebenen Ausbringverfahrens erfolgen. Schließlich kann sich ein Schritt S54 anschließen, der die eigentliche Bearbeitung, also etwa das Schleifen oder Polieren, allgemein ein Glätten des Werkstücks beinhalten kann. Vorzugsweise sind die Schritte S52 und S54 hochgradig automatisiert.

## Patentansprüche

1. Verfahren zum Ausbringen von Festpasten zur Oberflächenbearbeitung auf ein Bearbeitungswerkzeug (16), umfassend die folgenden Schritte:
- Bereitstellen einer Festpaste (46) zur Oberflächenbearbeitung, die Abrasivstoffe enthält, insbesondere einer Festpaste mit einem Lipid basierten Trägerwerkstoff, dem Abrasivstoffe beigemischt sind,
- Erweichen zumindest einer Teilmenge der Festpaste (46) durch Zuführung thermischer Energie, um diese in einen pastösen Zustand zu bringen, wobei ein Durchmischungsgrad der erweichten Paste mit den Abrasivstoffen im Wesentlichen beibehalten wird,
- Fördern der erweichten Paste, im pastösen Zustand, mittels einer für abrasiv wirksame Medien ausgebildeten Fördereinrichtung (50) zu einer Dosiereinrichtung (56), und
- Auftragen der erweichten Paste auf ein Bearbeitungswerkzeug (16) mittels der Dosiereinrichtung (56), insbesondere Aufbringen auf ein Werkzeug zur Oberflächenbearbeitung.

2. Verfahren nach Anspruch 1, wobei die Festpaste (46) bei Raumtemperatur eine im Wesentlichen steife bis plastische Konsistenz aufweist, und wobei die Festpaste (46) durch Erwärmen in einen erweichten Zustand überführbar ist, in dem die erweichte Paste eine im Wesentlichen plastische bis weiche Konsistenz aufweist, insbesondere eine breiige Konsistenz.

3. Verfahren nach Anspruch 1 oder 2, wobei das Erweichen der Festpaste (46) für die beigemischten Abrasivstoffe im Wesentlichen sedimentationsfrei erfolgt, und wobei die Paste im erweichten Zustand vorzugsweise eine im Wesentlichen homogene Verteilung der beigemischten Abrasivstoffe aufweist.

4. Verfahren nach einem der vorhergehenden Ansprüche, wobei der Schritt des Förderns ein Fördern mittels einer Fluidenergiemaschine umfasst, insbesondere ein Pumpen mittels einer Pumpeinheit (52), die für abrasiv wirksame Medien ausgebildet ist.

5. Verfahren nach einem der vorhergehenden Ansprüche, wobei der Schritt des Förderns ein Fördern der erweichten Paste entlang zumindest eines zumindest abschnittsweise beheizbaren Förderpfades (54) der Fördereinrichtung (50) umfasst.

6. Verfahren nach einem der vorhergehenden Ansprüche, wobei der Schritt des Bereitstellens ein Bereitstellen eines Gebindes (42) aufweist, das ein mit einer erstarrten Menge der Festpaste (46) gefülltes Behältnis (44) umfasst, wobei das Behältnis (44) vorzugsweise mit einer kompakten Menge der Festpaste (46) befüllt ist.

7. Verfahren nach Anspruch 6, wobei die Festpaste (46) direkt im Behältnis (44) verarbeitet wird, insbesondere im Behältnis (44) erweicht sowie durch eine Pumpeinheit (52) aus dem Behältnis (44) gefördert wird.

8. Verfahren nach einem der vorhergehenden Ansprüche, wobei der Schritt des Auftragens ein Ausbringen der Paste durch eine Düse (76, 98), insbesondere eine Breitschlitzdüse, umfasst, die an das Bearbeitungswerkzeug (16), insbesondere an eine Werkzeugbreite, angepasst ist.

9. Verfahren nach einem der vorhergehenden Ansprüche, wobei der Schritt des Auftragens ein Ausbringen der Paste auf ein Leitelement (78), insbesondere auf eine Pressleitplatte, umfasst, das in einem Umfangsbereich des Bearbeitungswerkzeugs (16) angeordnet ist, wobei sich auf dem Leitelement (78) befindliche Paste vom Bearbeitungswerkzeug (16) mitgenommen wird.

10. Verfahren nach einem der Ansprüche 1 bis 8, wobei der Schritt des Auftragens ein Ausbringen der Paste durch eine Hochdruckdüse (98) umfasst, die vom Bearbeitungswerkzeug (16) beabstandet ist.

11. Verfahren zur Oberflächenbearbeitung von Werkstücken (14), umfassend die folgenden Schritte:
- Bereitstellung eines Bearbeitungswerkzeugs (16), insbesondere einer Polierscheibe (18) oder Bürste,
- Ausbringen einer Festpaste (46) zur Oberflächenbearbeitung auf das Bearbeitungswerkzeug (16) gemäß einem der vorhergehenden Ansprüche, und
- Bearbeiten, insbesondere Bürsten oder Polieren, eines Werkstücks (14) mit dem Bearbeitungswerkzeug (16), auf das die Paste aufgebracht ist.

12. Verfahren nach Anspruch 11, ferner aufweisend:
- automatisiertes Bearbeiten einer Mehrzahl von Werkstücken (14), die mittels einer Handhabungseinrichtung (28) zu Bearbeitungszwecken nacheinander in Kontakt mit dem Bearbeitungswerkzeug (16) gebracht werden, und
- kontinuierliches oder quasi-kontinuierliches Ausbringen der Festpaste (46) auf das Bearbeitungswerkzeug (16).

13. Vorrichtung (40) zum Ausbringen von Festpasten zur Oberflächenbearbeitung auf ein Bearbeitungswerkzeug (16), die Folgendes aufweist:
- eine Heizeinrichtung (58), die dazu ausgebildet ist, eine Festpaste (46) zur Oberflächenbearbeitung, die Abrasivstoffe enthält, insbesondere einer Festpaste mit einem Lipid basierten Trägerwerkstoff, dem Abrasivstoffe beigemischt sind, zu erwärmen, wobei zumindest eine Teilmenge der Festpaste (46) durch Zuführung thermischer Energie erweichbar ist, um die Festpaste (46) in einen pastösen Zustand zu bringen, wobei ein Durchmischungsgrad der erweichten Paste mit den Abrasivstoffen im Wesentlichen beibehalten wird,
- eine Fördereinrichtung (50) mit einer Pumpeinheit (52), die zumindest eine Pumpe (64) aufweist, die zur Förderung abrasiv wirksamer Medien ausgebildet ist, und mit zumindest einem Förderpfad (54), insbesondere einer Förderleitung, für die erweichte Paste im pastösen Zustand, und
- eine Dosiereinrichtung (56) zum Auftragen der erweichten Paste auf ein Bearbeitungswerkzeug (16).

14. System zur automatisierten Bearbeitung von Werkstücken (14), das Folgendes aufweist:
- eine Ausbringvorrichtung (40) gemäß Anspruch 13,
- zumindest ein Bearbeitungswerkzeug (16), insbesondere eine Polierscheibe (18) oder Bürste, und
- zumindest eine automatisierte Handhabungseinrichtung (28), die dazu ausgebildet ist, Werkstücke (14) zu Bearbeitungszwecken nacheinander in Kontakt mit dem Bearbeitungswerkzeug (16) zu bringen.

15. Verwendung einer Festpaste (46) zur Oberflächenbearbeitung, die Abrasivstoffe enthält, insbesondere einer Festpaste mit einem Lipid basierten Trägerwerkstoff, dem Abrasivstoffe beigemischt sind, zur Herstellung eines Gebindes (42), das ein mit einer erstarrten Menge der Festpaste (46) gefülltes Behältnis (44) umfasst, wobei das Behältnis (44) vorzugsweise mit einer kompakten Menge der Festpaste (46) befüllt ist, wobei das Gebinde (42) zum Ausbringen von Festpasten (46) zur Oberflächenbearbeitung auf ein Bearbeitungswerkzeug (16) verwendbar ist, und wobei die Festpaste (46) direkt im Behältnis (44) verarbeitet wird, nämlich im Behältnis (44) erweicht und in einen pastösen Zustand gebracht sowie durch eine Pumpeinheit (52) aus dem Behältnis (44) gefördert wird, wobei das Erweichen ein Erweichen zumindest einer Teilmenge der Festpaste (46) durch Zuführung thermischer Energie umfasst, wobei ein Durchmischungsgrad der erweichten Paste mit den Abrasivstoffen im Wesentlichen beibehalten wird, wobei das Fördern der erweichten Paste ein Fördern im pastösen Zustand mittels einer für abrasiv wirksame Medien ausgebildeten Fördereinrichtung (50) zu einer Dosiereinrichtung (56) umfasst, und wobei das Ausbringen ein Zuführen der erweichten Paste zu einem Bearbeitungswerkzeug (16) sowie ein Auftragen der erweichten Paste auf das Bearbeitungswerkzeug (16) mittels der Dosiereinrichtung (56) umfasst, insbesondere ein Aufbringen auf ein Werkzeug zur Oberflächenbearbeitung.

## Claims

1. A method for dispensing solid compound pastes for surface treatment to a machining tool (16) comprising the following steps:
- providing a solid compound paste (46) for surface treatment that contains abrasives, particular a solid compound paste having a lipid based carrier material to which abrasives are admixed,
- softening at least a partial amount of the solid compound paste (46) by supplying thermal energy, to bring it into a pasty state, wherein a mixing level of the softened paste with the abrasives is substantially maintained,
- feeding the softened paste, in the pasty state, to a dosing device (56) by means of a conveyor device (50) that is configured for abrasively effective media, and
- applying the softened paste to a machining tool (16) by means of the dosing device (56), particularly applying to a tool for surface treatment.

2. The method as claimed in claim 1, wherein the solid compound paste (46) comprises, at room temperature, a substantially stiff-to-plastic consistency, and wherein the solid compound paste (46) is arranged to be transferred by heating to a softened state in which the softened paste comprises a substantially plastic-to-soft consistency, particularly a pasty consistency.

3. The method as claimed in claim 1 or 2, wherein the softening of the solid compound paste (46) is performed substantially sedimentation-free for the admixed abrasives, and wherein the paste preferably comprises, in the softened state, a substantially homogeneous distribution of the admixed abrasives.

4. The method as claimed in any of the preceding claims, wherein the step of feeding involves feeding by means of a fluid energy machine, particularly pumping by means of a pump unit (52) that is arranged for abrasively effective media.

5. The method as claimed in any of the preceding claims, wherein the step of feeding involves feeding the softened paste along at least one conveyor path (54) of the conveyor device (50) that is at least sectionally heatable.

6. The method as claimed in any of the preceding claims, wherein the step of providing involves providing a container (42) that comprises a vessel (44) that is filled with a solidified amount of the solid compound paste (46), wherein the vessel (44) is preferably filled with a compact amount of the solid compound paste (46).

7. The method as claimed in claim 6, wherein the solid compound paste (46) is directly processed in the vessel (44), particularly softened in the vessel (44) and fed by a pump unit (52) out of the vessel (44).

8. The method as claimed in any of the preceding claims, wherein the step of applying involves dispensing the paste through a nozzle (76, 98), particularly a wide slot nozzle that is adapted to the machining tool (16), particularly to a tool width.

9. The method as claimed in any of the preceding claims, wherein the step of applying involves dispensing the paste to a guide plate (78), particularly to a pressure guide plate, that is arranged in a peripheral region of the machining tool (16), and wherein the paste that is present at the guide plate (78) is entrained by the machining tool (16).

10. The method as claimed in any of the claims 1 to 8, wherein the step of applying involves dispensing the paste through a high pressure nozzle (98) that is spaced away from the machining tool (16).

11. A method for surface treatment of work pieces (14), comprising the following steps:
- providing a machining tool (16), particularly a polishing disc (18) or brush,
- dispensing a solid compound paste (46) for surface treatment to the machining tool (16) according to any of the preceding claims, and
- machining, particularly brushing or polishing, a work piece (14) with the machining tool (16) to which the paste is applied.

12. The method as claimed in claim 11, further comprising:
- automated machining of a plurality of work pieces (14) that are successively brought into contact with the machining tool (16) for machining purposes by means of a handling device (28), and
- continuous or quasi continuous dispensing of the solid compound paste (46) to the machining tool (16).

13. A device (40) for dispensing solid compound pastes for surface treatment to a machining tool (16), the device comprising the following:
- a heating device (58) that is arranged to heat a solid compound paste (46) for surface treatment that contains abrasives, particularly a solid compound paste comprising a lipid based carrier material to which abrasives are admixed, wherein at least a partial amount of the solid compound paste (46) is arranged to be softened by supplying thermal energy, to bring the solid compound paste (46) into a pasty state, while a mixing level of the softened paste with the abrasives is substantially maintained,
- a conveyor device (50) having a pump unit (52) comprising at least one pump (64) that is arranged for conveying abrasively effective media, and with at least one conveyor path (54), particularly a conveyor line, for the softened paste in the pasty state, and
- a dosing device (56) for applying the softened paste to a machining tool (16).

14. A system for automated machining of work pieces (14) comprising:
- a dispensing device (40) as claimed in claim 13,
- at least one machining tool (16), particularly a polishing disc (18) or brush, and
- at least one automated handling device (28) that is arranged to bring work pieces (14) successively into contact with the machining tool (16) for machining purposes.

15. A use of a solid compound paste (46) that contains abrasives for surface treatment, particularly of a solid compound paste having a lipid based carrier material to which abrasives are admixed, for manufacturing a container (42) that comprises a vessel (44) that is filled with a solidified amount of the solid compound paste (46), wherein the vessel (44) is preferably filled with a compact amount of the solid compound paste (46), wherein the container (42) is arranged to be used for dispensing solid compound pastes (46) for surface treatment to a machining tool (16), and wherein the solid compound paste (46) is directly processed in the vessel (44), namely softened in the vessel (44) and brought into a pasty state, and conveyed by a pump unit (52) out of the vessel (44), wherein the softening involves a softening at least a partial amount of the solid compound paste (46) by supplying thermal energy, wherein a mixing level of the softened paste with the abrasives is substantially maintained, wherein the feeding of the softened paste involves a feeding to a dosing device (56) in the pasty state by means of a conveyor device (50) that is configured for abrasively effective media, and wherein the dispensing involves a feeding of the softened paste to a machining tool (16) and an application of the softened paste by means of the dosing device (56), particularly an application to a tool for surface treatment.

## Revendications

1. Procédé destiné à la dispensation de pâtes solides en vue du traitement de surface sur un outil de traitement (16), comprenant les phases suivantes :
- la fourniture d'une pâte solide (46) en vue du traitement de surface, laquelle contient des substances abrasives, en particulier d'une pâte solide avec un matériau de support à base de lipide, auquel des substances abrasives sont ajoutées par mélange,
- le ramollissement d'au moins une quantité partielle de la pâte solide (46) par apport d'énergie thermique afin de l'amener à un état pâteux, un certain degré de mixité de la pâte ramollie avec les substances abrasives étant, pour l'essentiel, conservé,
- le transport de la pâte ramollie à l'état pâteux vers un mécanisme de dosage (56) au moyen d'un mécanisme de transport (50), lequel est conçu pour des milieux à action abrasive, et
- l'application de la pâte ramollie sur un outil de traitement (16) au moyen du mécanisme de dosage (56), en particulier l'application sur un outil destiné au traitement de surface.

2. Procédé selon la revendication 1, selon lequel la pâte solide (46) présente, à température ambiante, une consistance qui est, pour l'essentiel, de rigide à plastique, et selon lequel la pâte solide (46) peut être amenée par réchauffement à un état ramolli, dans lequel la pâte ramollie présente une consistance qui est, pour l'essentiel, de plastique àmolle, en particulier une consistance pâteuse.

3. Procédé selon la revendication 1 ou 2, selon lequel le ramollissement de la pâte solide (46) pour les substances abrasives ajoutées par mélange a lieu, pour l'essentiel, sans aucune sédimentation, et selon lequel, de préférence, la pâte présente, à l'état ramolli, une répartition pour l'essentiel homogène des substances abrasives ajoutées par mélange.

4. Procédé selon l'une des revendications précédentes, selon lequel la phase de transport comprend un transport au moyen d'une machine à énergie fluidique, en particulier un pompage au moyen d'une unité de pompe (52), laquelle est conçue pour des milieux à action abrasive.

5. Procédé selon l'une des revendications précédentes, selon lequel la phase de transport comprend un transport de la pâte ramollie le long d' au moins un chemin de transport (54) du mécanisme de transport (50), lequel chemin de transport peut être chauffé, au moins par sections.

6. Procédé selon l'une des revendications précédentes, selon lequel la phase de la fourniture présente la fourniture d'un moyen de conditionnement (42), lequel comprend un contenant (44) rempli d'une quantité solidifiée de la pâte solide (46), selon lequel le contenant (44) est, de préférence, rempli avec une quantité compacte de la pâte solide (46).

7. Procédé selon la revendication 6, selon lequel la pâte solide (46) est traitée directement dans le contenant (44), en particulier est ramollie dans le contenant (44) et est transportée en dehors du contenant (44) par une unité de pompe (52).

8. Procédé selon l'une des revendications précédentes, selon lequel la phase de l'application comprend une dispensation de la pâte à travers une buse (76, 98), en particulier une buse à fente large, laquelle est adaptée à l'outil de traitement (16), en particulier à une largeur d'outil.

9. Procédé selon l'une des revendications précédentes, selon lequel la phase de l'application comprend une dispensation de la pâte sur un élément de guidage (78), en particulier sur une plaque de guidage et de pressage, lequel est disposé dans une zone périphérique de l'outil de traitement (16), la pâte qui se trouve sur l'élément de guidage (78) étant emmenée par l'outil de traitement (16).

10. Procédé selon l'une des revendications 1 à 8, selon lequel la phase de l'application comprend une dispensation de la pâte à travers une buse à haute pression (98), laquelle se trouve à une certaine distance de l'outil de traitement (16).

11. Procédé destiné au traitement de surface de pièces (14), comprenant les phases suivantes :
- la fourniture d'un outil de traitement (16), en particulier d'un disque de polissage (18) ou d'une brosse ;
- la dispensation d'une pâte solide (46) destinée au traitement de surface sur l'outil de traitement (16) selon l'une des revendications précédentes, et
- le traitement, en particulier le brossage ou le polissage, d'une pièce (14) avec l'outil de traitement (16) sur lequel la pâte est appliquée.

12. Procédé selon la revendication 11, présentant en outre :
- le traitement automatisé d'une pluralité de pièces (14), lesquelles sont mises en contact avec l'outil de traitement (16) les unes après les autres au moyen d'un mécanisme de manipulation (28) à des fins de traitement, et
- la dispensation continue ou presque continue de la pâte solide (46) sur l'outil de traitement (16).

13. Dispositif (40) destiné à la dispensation de pâtes solides sur un outil de traitement (16) en vue du traitement de surface, lequel dispositif présente les éléments suivants :
- un mécanisme de chauffage (58), lequel est conçu en vue de réchauffer une pâte solide (46) qui est destinée au traitement de surface et qui contient des substances abrasives, en particulier une pâte solide avec un matériau de support à base de lipide, auquel des substances abrasives sont ajoutées par mélange, selon lequel au moins une quantité partielle de la pâte solide (46) peut être ramollie par apport d'énergie thermique, afin d'amener la pâte solide (46) à un état pâteux, selon lequel un certain degré de mixité de la pâte ramollie avec les substances abrasives est, pour l'essentiel, conservé,
- un mécanisme de transport (50) avec une unité de pompe (52), laquelle présente au moins une pompe (64) qui est conçue en vue du transport de milieux à action abrasive, et avec au moins un chemin de transport (54), en particulier une conduite de transport, pour la pâte ramollie à l'état pâteux, et
- un mécanisme de dosage (56) en vue de l'application de la pâte ramollie sur un outil de traitement (16).

14. Système destiné au traitement automatisé de pièces (14), lequel système présente les éléments suivants :
- un dispositif de dispensation (40) selon la revendication 13,
- au moins un outil de traitement (16), en particulier un disque de polissage (18) ou une brosse, et
- au moins un mécanisme de manipulation (28) automatisé, lequel est conçu en vue de la mise en contact de pièces (14), les unes après les autres, avec l'outil de traitement (16) à des fins de traitement.

15. Utilisation d'une pâte solide (46) destinée au traitement de surface, laquelle contient des substances abrasives, en particulier d'une pâte solide avec un matériau de support à base de lipide, auquel des substances abrasives sont ajoutées par mélange, en vue de la fabrication d'un moyen de conditionnement (42), lequel comprend un contenant (44) rempli d'une quantité solidifiée de la pâte solide (46) ; selon laquelle le contenant (44) est, de préférence, rempli avec une quantité compacte de la pâte solide (46) ; selon laquelle le moyen de conditionnement (42) peut être utilisé en vue de la dispensation de pâtes solides (46) en vue du traitement de surface sur un outil de traitement (16) ; et selon laquelle la pâte solide (46) est traitée directement dans le contenant (44), c'est-à-dire est ramollie et amenée à un état pâteux dans le contenant (44) et est transportée en dehors du contenant (44) par une unité de pompe (52) , selon laquelle le ramollissement comprend le ramollissement d'au moins une quantité partielle de la pâte solide (46) par apport d'énergie thermique, selon laquelle un certain degré de mixité de la pâte ramollie avec les substances abrasives est, pour l'essentiel, conservé, selon laquelle le transport de la pâte ramollie comprend un transport à l'état pâteux vers un mécanisme de dosage (56) au moyen d'un mécanisme de transport (50), lequel est conçu pour des milieux à action abrasive, et selon laquelle la dispensation comprend un acheminement de la pâte ramollie à un outil de traitement (16), ainsi qu'une application de la pâte ramollie sur l'outil de traitement (16) au moyen du mécanisme de dosage (56), en particulier une application sur un outil en vue du traitement de surface.
